# EUROPEAN PATENT SPECIFICATION

(11) **EP 3 502 513 B1**
(45) Date of publication and mention of the grant of the patent: **11.11.2026**
(21) Application number: 18189053.4
(22) Date of filing: 14.08.2018
(51) Int. Cl.: F16H 21/44

(54) **LIFT MECHANISM FOR A PACKAGING MACHINE**
HEBEMECHANISMUS FÜR EINE VERPACKUNGSMASCHINE
MÉCANISME DE LEVAGE POUR MACHINE D'EMBALLAGE

(30) Priority: 13.08.2018 US 201816102116; 14.08.2017 US 201762545025 P
(43) Date of publication of application: 26.06.2019
(73) Proprietor: CP Packaging, Inc., Appleton, WI 54914 (US)
(72) Inventor: BUCHKO Jr, Raymond G., Fremont, Wisconsin 54940 (US); GOLLA, Rodney W., New London, Wisconsin 54961 (US)
(74) Representative: Forresters IP LLP

(56) References cited:
- EP-A1- 2 218 575
- EP-A1- 2 666 727
- US-A- 5 517 805
- US-A1- 2003 042 862

## Description

### BACKGROUND

A well-known type of packaging machine involves advancing web material through the machine, typically in an indexing manner, with various operations being performed by the machine on the web material as it is advanced through the machine. For example, in a typical machine, forming tooling first acts on a lower web of material to form the lower web to define a series of cavities. The cavities are then loaded with the product being packaged, and an upper web is then supplied to overlie the loaded cavities. The upper web is then sealed to the lower web, and the sealed webs are severed about the sealed cavities to form individual packages. In some cases, the cavity atmosphere may be modified, such as in a gas flush or evacuation process, before the cavity is sealed. Packaging machines such as this, as well as other types of machines that are used in packaging and other applications, require various components to move upwardly and downwardly during the process. Traditionally, this is achieved using complicated lift mechanisms. For instance, many such machines require equipment located at all four corners of the lift system. In turn, this results in lift points located in the four corners of the lift system. Oftentimes, the equipment consists of two-link systems, which are complicated to use. These complications are exacerbated where four separate two-link systems are used in tandem to result in coordinated movement in upward and downward directions. As a result, issues with any one of the four systems can render the lift mechanism inoperable. Similar issues exist for many other types of machines that required various components to be repeatedly moved from a first position to a second position, including in upward and downward positions or side-to-side positions.
EP2218575 describes an electrical lifting unit including a lifting device for causing lifting movement with a large hoist, and another lifting device for causing lifting movement with a creep hoist.
US2003/042862 describes a reciprocating linear actuator including a frame and a servomotor mounted to the frame. A crank is gear-coupled with integer gear ratio to the servomotor for unidirectional rotation.
US5517805 A describes a vacuum packaging machine including a drive mechanism for moving tools horizontally and vertically at forming and sealing stations.
EP2666727 A1 describes a lifting device for a work station of a packaging machine. The lifting mechanism comprises a drive carriage and a movable frame structure having a first wall and a second wall, a motor, a drive shaft, a drive link with a first end and a second end, wherein the drive shaft extends through the first end of the drive link and is fixedly connected to the first end of the drive link; The lift mechanism includes further a v-shaped arm wherein the first end is rotatably connected to the second end of the drive link; wherein the v-shaped arm is rotated by the drive link so that the movable frame structure is moved vertically relative to the base when the motor is actuated.

### SUMMARY OF THE INVENTION

According to the present invention a lift mechanism for a packaging machine according to claim 1 is provided. Preferred embodiments of the present invention are laid down in the dependent claims 2 to 6.

According to the invention, the lift mechanism for a packaging machine includes a drive carriage with a stationary base and a movable frame structure having a first wall and a second wall. The lift mechanism includes a motor, a drive member, a driven member, a drive belt, a drive shaft, a drive link, a substantially v-shaped arm, and a second shaft. The drive member is configured to rotate in response to operation of the motor, and the drive belt is engaged with the drive member and the driven member such that rotation of the drive member results in rotation of the driven member.

Additionally, the drive shaft extends from the driven member across the drive carriage. Thus, rotation of the driven member also results in rotation of the drive shaft. The drive link has first and second ends, and the drive shaft extends through and is fixedly connected to the first end. As such, rotation of the drive link also results in rotation of the drive shaft. The substantially v-shaped arm also has a first end, a second end, and a valley portion located therebetween. The first end is rotatably connected to the second end of the drive link. Further still, the second shaft extends through and is rotatably connected to the second end of the v-shaped arm and to the first wall and the second wall. Therefore, when the drive link is rotated, the v-shaped arm moves the frame structure vertically relative to the base when the motor is actuated. The geometry of the substantially v-shaped arm and the drive link allow the rotary motion of the drive member to be translated into linear vertical motion.

Bearings and guide tracks may be provided to facilitate movement of the frame structure relative to the base. For instance, the second shaft may have bearings located at either end that can be fitted within a first circular opening in the first wall and a second circular opening in the second wall. Additionally, the substantially v-shaped arm may rotate relative to the drive carriage about the bearings. Further still, guide tracks may be located in corners of the frame structure that are compatible with guide track receivers of the base.

Other aspects, features and advantages of the invention will become apparent to those skilled in the art from the following detailed description and accompanying drawings. It should be understood, however, that the detailed description and specific examples are given by way of illustration and not of limitation.

### BRIEF DESCRIPTION OF THE DRAWINGS

A clear conception of the advantages and features constituting the present invention will become more readily apparent by referring to the exemplary, and therefore non-limiting, embodiments illustrated in the drawings accompanying and forming a part of this specification, wherein like reference numerals designate the same elements in the several views.

In the drawings:
FIG. 1 is an isometric view of a simplified lift mechanism for use with a machine, such as a packaging machine, in a lowered position;
FIG. 2 is an isometric view the simplified lift mechanism of FIG. 1 in a raised position;
FIG. 3 is a side elevation view of the simplified lift mechanism of FIG. 2 in the raised position;
FIG. 4 is a cross-sectional view of the simplified lift mechanism in the raised position taken along line 4-4 of FIG. 2;
FIG. 5 is a cross-sectional view of the simplified lift mechanism of FIGS. 1-4 in a first intermediate position between the lowered position and the raised position;
FIG. 6 is a cross-sectional view of the simplified lift mechanism of FIGS. 1-5 in a second intermediate position between the lowered position and the raised position;
FIG. 7 is a cross-sectional view of the simplified lift mechanism of FIGS. 1-6 in a third intermediate position between the lowered position and the raised position;
FIG 8 is a cross-sectional view of the simplified lift mechanism in the lowered position taken along line 8-8 of FIG. 1;
FIG. 9 is an isometric view of the simplified lift mechanism with a component of a machine mounted thereto;
FIG. 10 is an exploded isometric view of the components of the simplified lift mechanism;
FIG. 11 is an isometric view of a drive link associated with the simplified lift mechanism; and

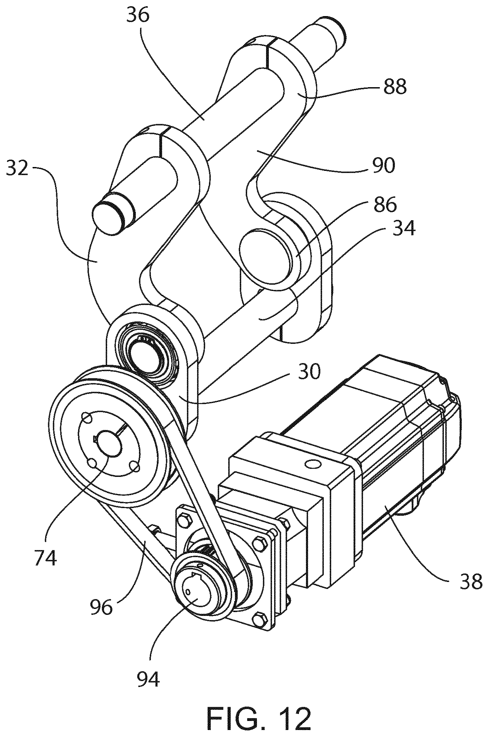

FIG. 12 is an isometric view of the drive link in connection with a driven pulley, a motor, and a drive pulley.

In describing the embodiments of the invention which are illustrated in the drawings, specific terminology will be resorted to for the sake of clarity. However, it is not intended that the invention be limited to be specific terms so selected and it is to be understood that each specific term includes all technical equivalents which operate in a similar manner to accomplish a similar purpose. For example, the words "connected," "attached," or terms similar thereto are often used. They are not limited to direct connection or attachment, but include connection or attachment to other elements where such connection or attachment is recognized as being equivalent by those skilled in the art

### DETAILED DESCRIPTION OF THE INVENTION

The various features and advantageous details of the subject matter disclosed herein are explained more fully with reference to the non-limiting embodiments described in detail in the following description.

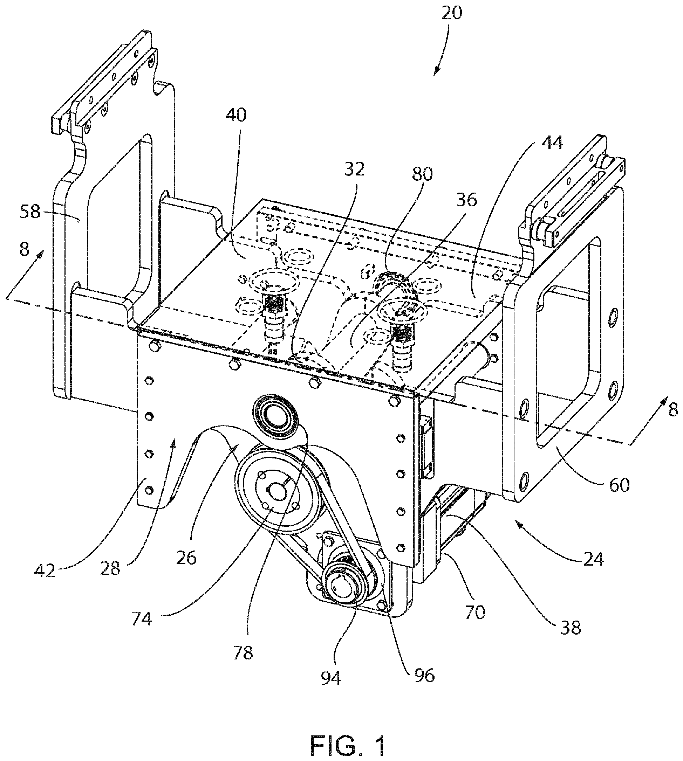

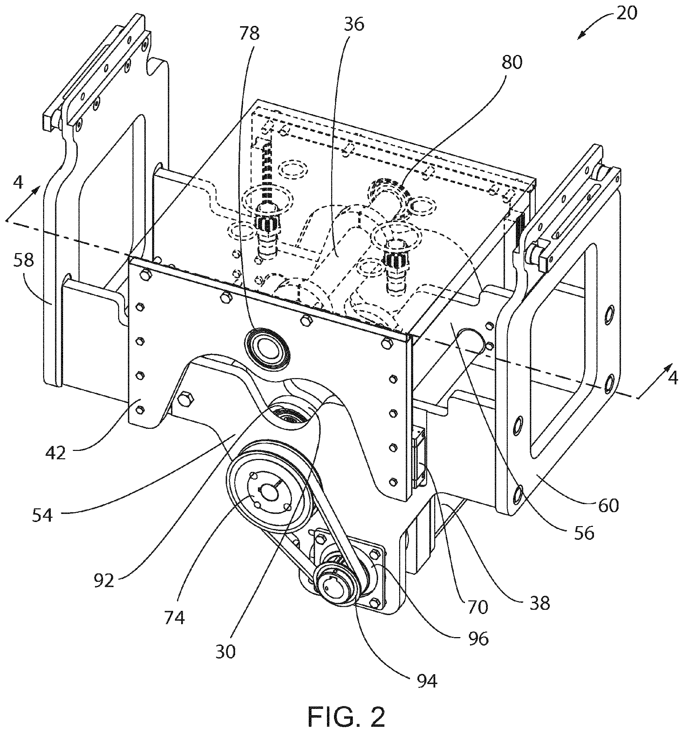

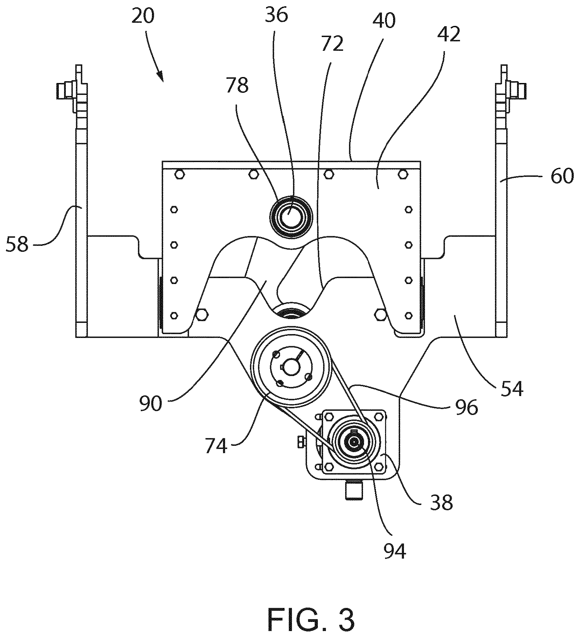

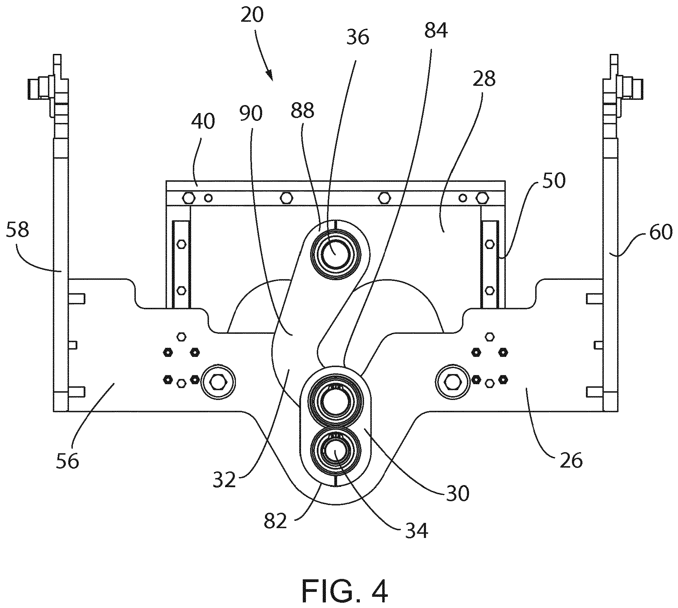

Referring to the following description in which like reference numerals represent like parts throughout the disclosure, a simplified lift mechanism 20 for use in a machine, such as a packaging machine, is shown. Examples of possible packaging machines in connection with which the simplified lift mechanism 20 could be used include those shown in U.S. Patent No. 7,934,362. The lift mechanism 20 may be used to reciprocally move a component of the machine, such as but not limited to a vacuum box 22 that rests atop the lift mechanism 20, between a lowered position, as shown in FIG. 1, and a raised position, as shown in FIGS. 2-4. The lift mechanism 20 has a drive carriage 24 with a stationary base 26, a top frame structure 28 that is movable relative to the stationary base 26, a drive link 30, an arm, such as a substantially v-shaped arm 32 as shown in the figures, a first drive shaft 34 and a second shaft 36. The drive link 30 and the substantially v-shaped arm 32 are rotated relative to one another to move the top frame structure 28, and the drive shaft 34 and the second shaft 36 transmit rotational forces from a motor 38 to the drive link 30 and the substantially v-shaped arm 32. Each of these components will be further described below.

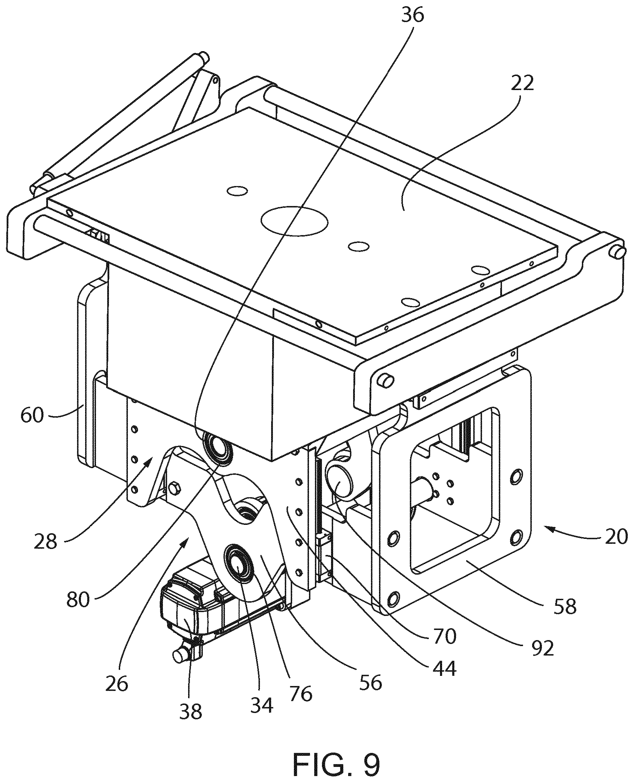

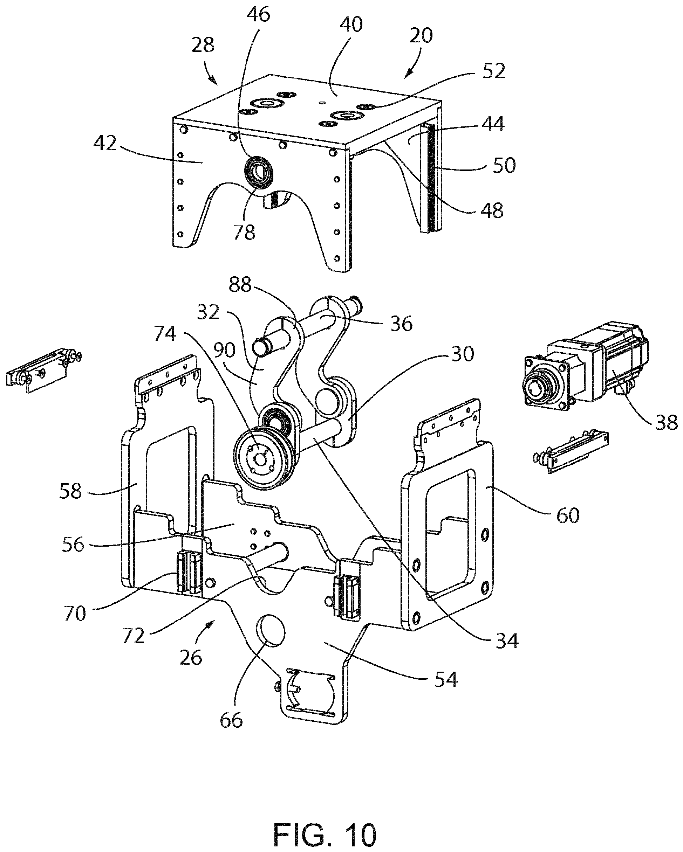

Looking to FIG. 10, the movable top frame structure 28 has a generally rectangular top plate 40 and a first side wall 42 and a second side wall 44, located opposite the first side wall 42, that extend downwardly from the top plate 40. The top plate 40 may be configured to support a vacuum box 22, such as shown in FIG. 9. Additionally, the first side wall 42 of the top frame structure 28 has a first circular opening 46 formed therein, and the second side wall 44 has a second circular opening 48 formed therein located directly opposite the first circular opening 46. As shown, these circular openings 46, 48 may be centrally-located about the first side wall 42 and the second side wall 44. Further, the movable top frame structure 28 includes guide tracks 50 located at each of the four corners of the structure 28. Additional openings 52 may be formed in the top plate 40, which enable various components, such as the vacuum box 22, to be securely mounted to the top frame structure 28.

Turning back to FIG. 10, the stationary base 26 also has a first side wall 54 and a second side wall 56 opposite the first side wall 54 with two connector plates 58, 60 extending from the first side wall 54 to the second side wall 56 at either end 62, 64 of the stationary base 26. Like the top frame structure 28, the stationary base 26 also has circular openings 66, 68 formed in the first side wall 54 and the second side wall 56, where the openings 66, 68 are located directly opposite one another. Again, these circular openings 66, 68 may be centrally-located about the first side wall 54 and the second side wall 56, and midway between the connector plates 58, 60 of the stationary base 26. Additionally, the stationary base 26 may include various guide track receivers 70. For instance, as shown, guide track receivers 70 may extend outwardly from the first side wall 54 and the second side wall 56 to engage with each of the four guide tracks 50. Further still, the stationary base 26 may have semi-circular recesses 72 located at the top edge of the first side wall 54 and the second side wall 56. These semi-circular recesses 72 may be centrally located about the first side wall 54 and the second side wall 56 midway between the connector plates 58, 60, and are configured to accommodate the second shaft 36 when the top frame structure 28 is in a lowered position, as can best be seen in FIG. 1.

The movable top frame structure 28 is movably connected to the stationary base 26. More specifically, the guide tracks 50 are configured to be slidably received within the guide track receivers 70. The guide tracks 50 and receivers 70 may be in the form of linear bearings, although it is understood that any satisfactory guide arrangement may be employed. The guide tracks 50 and guide track receivers 70 guide upward and downward movement of the movable top frame structure 28 relative to the stationary base 26, in a manner to be explained.

Additionally, the stationary base 26 and the movable top frame structure 28 are complementary in shape to one another, allowing the movable top frame structure 28 to initially be nested directly around the base 26 as shown in FIG. 1 before it is raised away from the base 26 along the guide tracks 50. Of course, the movable top frame structure 28 could similarly be nested directly within the base 26 before it is raised away from the base 26 along the guide tracks 50. As shown, the distance between the first side wall 42 and the second side wall 44 of the top frame structure 28 is greater than the distance between the first side wall 54 and second side wall 56 of the base 26 to enable the nested configuration of the stationary base 26 and the movable top frame structure 28.

Both the base 26 and the top frame structure 28 have a shaft rotatably associated therewith. Looking initially to the base 26, the drive shaft 34 extends from the first side wall 54 of the base 26 to the second side wall 56 of the base 26. On the first side wall 54, the drive shaft 34 extends past the side of the base 26 through the first circular opening 66, and a driven pulley 74 is fixedly connected to the drive shaft 34 on the outside of the first side wall 54. The driven pulley 74 is concentric with the drive shaft 34 such that when the pulley 74 is rotated, the drive shaft 34 in turn will rotate. On the opposite side, the drive shaft 34 is rotatably connected to the second side wall 56. For instance, the drive shaft 34 could have a bearing 76 installed on the second end, where the bearing 76 is inserted into the second circular opening 68. As such, the drive shaft 34 is rotatable about the base 26.

Looking to the top frame structure 28, the second shaft 36 extends from the first side wall 42 of the top frame structure 28 to the second side wall 44 of the top frame structure 28. Both ends of the second shaft 36 are rotatable about the top frame structure 28. For instance, both ends of the second shaft 36 can have bearings 78, 80 that are inserted into the first and second circular openings 46, 48 formed in the first and second side walls 42, 44 of the top frame structure 28. Because each of the openings 46, 48 is centrally-located, the centers of the drive shaft 34 and the second shaft 36 are located directly vertically relative to one another.

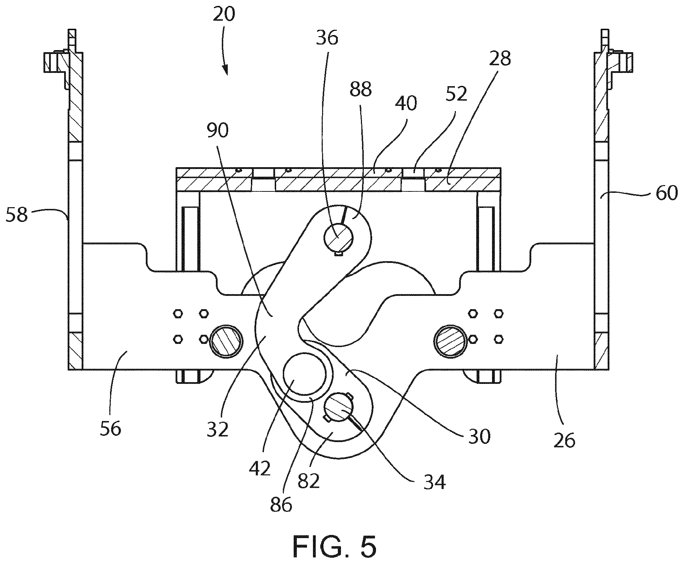

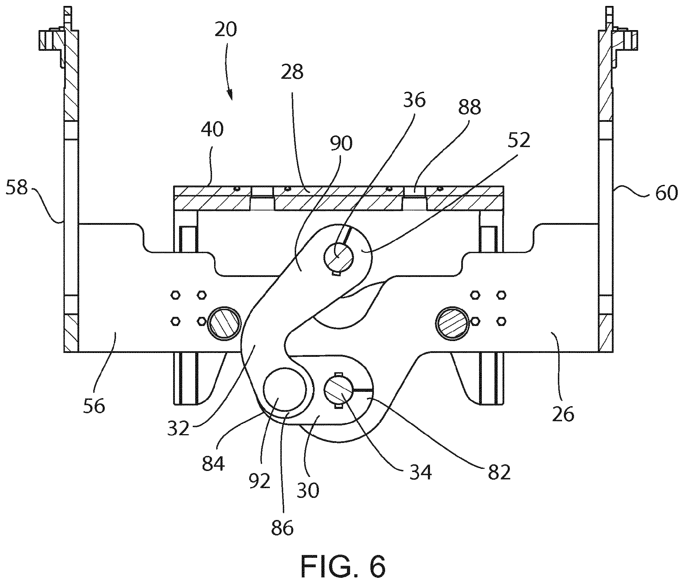

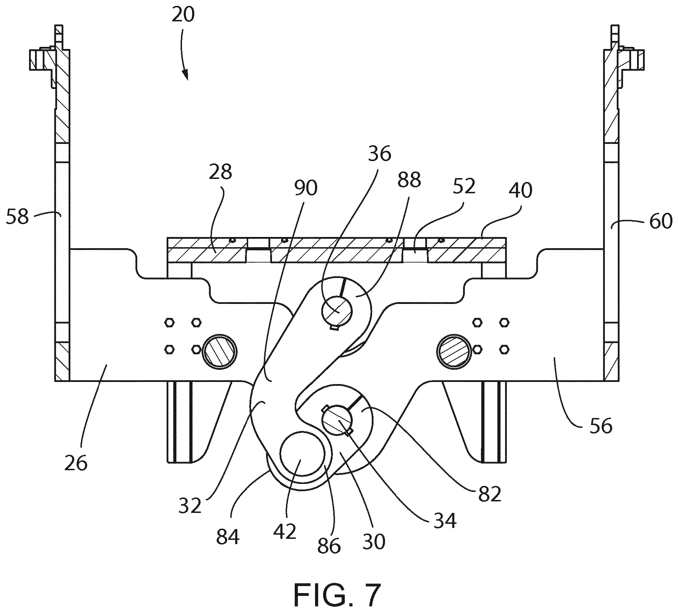

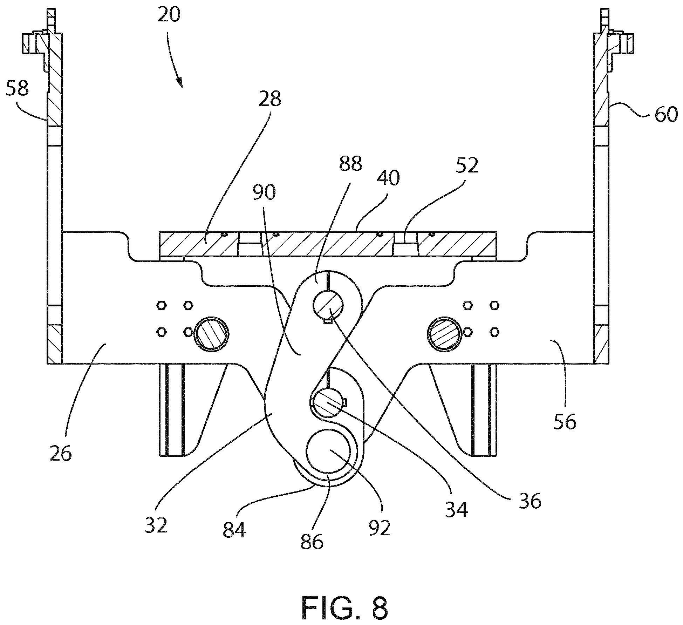

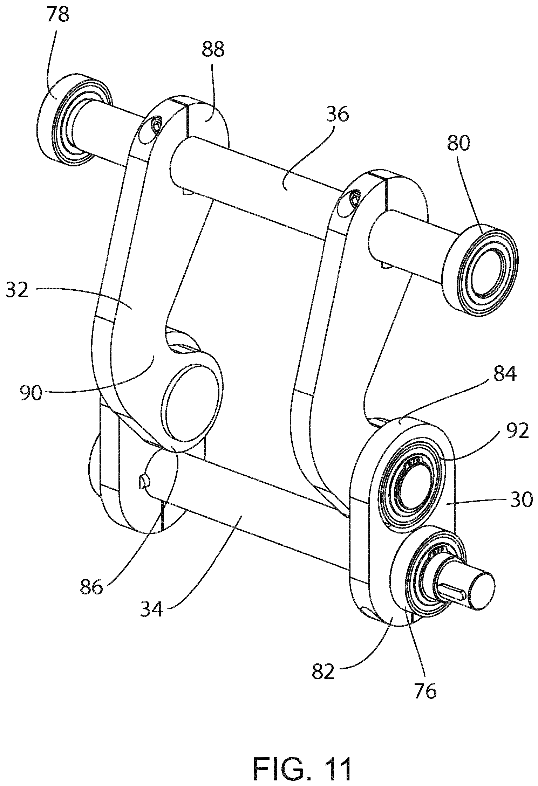

The simplified lift mechanism 20 also features the drive link 30, as can best be seen in FIG. 11. While only one drive link 30 will be described, as shown, a second drive link, which would be of substantially identical construction, could be included on the opposite side of the drive carriage 24. Of course, the simplified lift mechanism 20 could include additional drive links having similar or identical construction to the drive link 30 described here to further strengthen or increase the lifting capacity of the simplified lift mechanism 20. As shown, the drive link 30 may be substantially oval in shape, with a first end 82 and a second end 84. Of course, the drive link 30 could be any number of different shapes, including rectangular. A first opening (not shown) is formed in the first end 82 of the drive link 30 and a second opening (not shown) is formed in the second end 84. The drive shaft 34 extends through the first opening of the drive link 30 and is fixedly attached thereto. As a result, when the drive shaft 34 is rotated, the drive link 30 is rotated about the first opening. This allows the second end 84 of the drive link 30 to be pivotably moved from a lowered position in which it is substantially vertically beneath the first end 82 (see FIG. 1 and 8), to a series of intermediate positions (see FIGS. 5-7) including a position in which it is horizontal relative to the first end 82 (see FIG. 6), and finally to a raised position in which it is substantially vertically above the first end 82 (see FIGS. 2-4 and 9).

Next, the substantially v-shaped arm 32 will be further described, which can also best be seen in FIG. 11. While only one substantially v-shaped arm 32 will be described, as shown, the simplified lift mechanism 20 could have two substantially v-shaped arms located at either end of the drive carriage 24 for added support. Of course, additional substantially v-shaped arms could be provided having similar or identical construction to the substantially v-shaped arm 32 described here. The substantially v-shaped arm 32 includes a first end 86, a second end 88, and a valley portion 90 therebetween. Both the first end 86 and the second end 88 have openings (not shown) formed therein. The first end 86 of the substantially v-shaped arm 32 is rotatably attached to the second end 84 of the drive link 30, for instance using a bearing connection 92 that fits within the opening formed in first end 86 of the substantially v-shaped arm 32 and the second opening formed in the second end 84 of the drive link 30. This allows the first end 86 of the substantially v-shaped arm 32 to move from a lowered position in which the valley portion 90 receives the drive shaft 34 as shown in FIG. 1, to a raised position in which the valley portion 90 is located directly above the drive shaft 34, as shown in FIGS. 2-4. Additionally, the second shaft 36 extends through the opening formed in the second end 88 of the substantially v-shaped arm 32. The second end 88 of the substantially v-shaped arm 32 is fixedly-connected to the second shaft 36. As a result, the second end 88 of the substantially v-shaped arm 32 rotates along with the second shaft 36 about the bearings 78, 80 located within the first and second openings 46, 48 formed in the top frame structure 28.

The simplified lift mechanism 20 additionally includes the motor 38 with a drive pulley 94 that rotates in response to operation of the motor 38. A drive belt 96 wraps around the drive pulley 94 and the driven pulley 74 such that the drive pulley 94 and the driven pulley 74 simultaneously rotate. As a result, the rotational movement is transferred from the drive pulley 94 to the driven pulley 74, and in turn, the drive shaft 34.

Because of the geometry and the double-jointed nature of the drive link 30 and the substantially v-shaped arm 32, rotation of the first end 82 of the drive link 30 results in rotation of the substantially v-shaped arm 32. As the drive link 30 and the substantially v-shaped arm 32 rotate, the entire top frame structure 28 moves linearly upwardly or downwardly relative to the base 26 using a single lift point. Thus, the rotational movement of the drive pulley 94 is translated into linear vertical motion.

Operation of the simplified lift mechanism 20 will now be described. Initially, the drive carriage 24 is in a lowered position as shown in FIGS. 1 and 8. When in the lowered position, the top frame structure 28 is located directly above and is nested about the base 26. Additionally, the drive shaft 34 is received within the valley portion 90 of the substantially v-shaped arm 32. Also, when in the lowered position, the second end 84 of the drive link 30 is located directly beneath the first end 82 of the drive link 30. Upon operation of the motor 38, the drive pulley 94 moves clockwise. As the drive pulley 94 moves clockwise, the drive belt 96 translates the clockwise motion to the driven pulley 74 and the drive shaft 34. This also causes the drive link 30 to move clockwise about the first end from the initial position. As the first end 82 of the drive link 30 is moved clockwise, the second end 84 rotates upwardly in a clockwise direction. Because the first end 86 of the substantially v-shaped arm 32 is connected to the second end 84 of the drive link 30, the first end 86 of the substantially v-shaped arm 32 also rotates upwardly, as does the rest of the substantially v-shaped arm 32. As a result of the second end 88 of the substantially v-shaped arm 32 being connected to the second shaft 36, the second shaft 36 also moves upwardly. The top frame structure 28 also moves upwardly due to its connection to the second shaft 36 about the bearings 78, 80. Such upward movement of the top frame structure 28 is guided by the guide tracks 50 and guide track receivers 70, which are oriented parallel to the direction of movement of the second shaft 36. Therefore, the clockwise motion of the drive pulley 94 results in the entire top frame structure 28 moving upwardly relative to the base 26 as seen in FIGS. 5-7, to a raised position, as seen in FIGS. 2-4.

When in the raised position, the second end 84 of the drive link 30 is located directly vertically above the first end 82 of the drive link 30. Additionally, the second end 88 of the substantially v-shaped arm 32 is located vertically directly above the first end 86 of the substantially v-shaped arm 32.

To return the top frame structure 28 to the lowered position, the drive pulley 94 is moved counter-clockwise. Because the counter-clockwise movement of the drive pulley 94 is transmitted to the driven pulley 74 by the drive belt 96, the drive shaft 34 as well as the first end 82 of the drive link 30 also rotate in a counter-clockwise direction. This causes the second end 84 of the drive link 30 and the second end 88 of the v-shaped arm 32, as well as the top frame structure 28, to move downwardly, with such movement being guided by the guide tracks 50 and guide track receivers 70. Ultimately, the drive carriage 24 is returned to the lowered position in which the second end 84 of the drive link 30 and the first end 86 of the substantially v-shaped arm 32 return to a position directly beneath the drive shaft 34 and the first end 82 of the drive link 30.

While the drive carriage 24 is in motion, the second end 84 of the drive link 30 and the first end 86 and valley portion 90 of the substantially v-shaped arm 32 translate horizontally and vertically with relation to the drive carriage 24. Other components, including the top frame structure 28, the second shaft 36, and the second end 88 of the substantially v-shaped arm 32, move only vertically while the drive carriage 24 is in motion. The remaining components, including the base 26, the motor 38, the drive pulley 94, the driven pulley 74, the drive shaft 34, and the first end 82 of the drive link 30 do not translate horizontally or vertically while the drive carriage 24 is in motion.

As described, the simplified lift mechanism 20 has a single lift point. In contrast, lifting machines found in the prior art can use up to four, and sometimes more, two-link systems located at the four corners of the machine. This system provides a simplified alternative that is easier to assemble, operate and maintain.

The simplified lift mechanism 20 as shown and described may be used to lift and lower any machine component, and is particularly useful in an indexing motion-type machine. For example, in an indexing motion packaging machine, the simplified lift mechanism 20 may be use to lift and lower package forming tooling that acts on a web of material to create a cavity or pocket within which product(s) can be received. In addition, it should be understood that the simplified lift mechanism 20 may also be used to move machine components in any direction and is not limited to upward-downward movement as shown and described. Also, the simplified lift mechanism 20 could be used with any other machine components, including sealing evacuation chambers.

It should be understood that the above description is given by way of illustration and not of limitation.

Various additions, modifications, and rearrangements are contemplated as being within the scope of the following claims, which particularly point out and distinctly claim the subject matter regarding as the invention, and it is intended that the following claims cover all such additions, modifications, and rearrangements.

## Claims

1. A lift mechanism (20) for a packaging machine comprising:
a drive carriage (24) with a stationary base (26) and a movable frame structure (28), the frame structure (28) having a first wall (42) and a second wall (44);
a motor (38);
a drive member (94) configured to rotate in response to operation of the motor (38);
a driven member (74);
a drive belt (96) engaged with the drive member (94) and the driven member (74);
a drive shaft (34) extending from the driven member across the drive carriage (24);
a drive link (30) with a first end (82) and a second end (84), wherein:
the drive shaft (34) extends through the first end (82) of the drive link (30); and
the drive shaft (34) is fixedly connected to the first end (82) of the drive link (30);
wherein the lift mechanism (20) includes
a substantially v-shaped arm (32) with a first end (86), a second end (88), and a valley portion (90) located therebetween, wherein the first end (86) is rotatably connected to the second end (84) of the drive link (30); and
a second shaft (36) extending through and rotatably connected to the second end (88) of the v-shaped arm (32), wherein the second shaft (36) extends from the first wall (42) to the second wall (44);
wherein the drive belt (96) transmits rotary motion from the drive member (94) to the driven member (74);
wherein the rotary motion is transmitted to the drive shaft (34);
wherein the drive link (30) is rotated by the rotation of the drive shaft (34); and
wherein the v-shaped arm (32) is rotated by the drive link (30) so that the movable frame structure (28) is moved vertically relative to the base (26) when the motor (38) is actuated.

2. The lift mechanism (20) of claim 1, further comprising bearings (78, 80) on either end of the second shaft (36);
wherein the bearings (78, 80) are located within a first circular opening (46) in the first wall (42) and a second circular opening (48) in the second wall (44).

3. The lift mechanism (20) of claim 2 wherein the substantially v-shaped arm (32) rotates relative to the frame structure (28) about the bearings (78, 80).

4. The lift mechanism (20) of claim 1, further comprising a guide track (50) located along corners of the frame structure (28).

5. The lift mechanism (20) of claim 1, wherein the geometry of the substantially v-shaped arm (32) and the drive link (30) allow the rotary motion of the drive member (94) powered by the motor (38) to translate into linear vertical motion.

6. The lift mechanism of claim 1, further comprising a second v-shaped arm and a second drive link.

## Patentansprüche

1. Hebemechanismus (20) für eine Verpackungsmaschine, umfassend:
Einen Antriebsschlitten (24) mit einer ortsfesten Basis (26) und einer beweglichen Rahmenstruktur (28), wobei die Rahmenstruktur (28) eine erste Wand (42) und eine zweite Wand (44) aufweist;
Einen Motor (38);
ein Antriebselement (94), das dazu konfiguriert ist, sich als Reaktion auf den Betrieb des Motors (38) zu drehen;
ein angetriebenes Element (74);
einen Antriebsriemen (96), der mit dem Antriebselement (94) und dem angetriebenen Element (74) in Eingriff steht;
eine Antriebswelle (34), die sich vom angetriebenen Element über den Antriebsschlitten (24) erstreckt;
ein Antriebsglied (30) mit einem ersten Ende (82) und einem zweiten Ende (84), wobei:
Sich die Antriebswelle (34) durch das erste Ende (82) des Antriebsglieds (30) erstreckt; und
die Antriebswelle (34) fest mit dem ersten Ende (82) des Antriebsglieds (30) verbunden ist;
wobei der Hebemechanismus (20) umfasst:
Einen im Wesentlichen V-förmigen Arm (32) mit einem ersten Ende (86), einem zweiten Ende (88) und einem dazwischen liegenden Talabschnitt (90), wobei das erste Ende (86) drehbar mit dem zweiten Ende (84) des Antriebsglieds (30) verbunden ist; und
eine zweite Welle (36), die sich durch das zweite Ende (88) des V-förmigen Arms (32) erstreckt und drehbar mit diesem verbunden ist, wobei sich die zweite Welle (36) von der ersten Wand (42) zur zweiten Wand (44) erstreckt;
wobei der Antriebsriemen (96) eine Drehbewegung vom Antriebselement (94) auf das angetriebene Element (74) überträgt;
wobei die Drehbewegung auf die Antriebswelle (34) übertragen wird;
wobei das Antriebsglied (30) durch die Drehung der Antriebswelle (34) gedreht wird; und
wobei der V-förmige Arm (32) durch das Antriebsglied (30) gedreht wird, sodass die bewegliche Rahmenstruktur (28) bei Betätigung des Motors (38) vertikal relativ zur Basis (26) bewegt wird.

2. Hebemechanismus (20) nach Anspruch 1, ferner Lager (78, 80) an beiden Enden der zweiten Welle (36) umfassend;
wobei sich die Lager (78, 80) in einer ersten kreisförmigen Öffnung (46) in der ersten Wand (42) und einer zweiten kreisförmigen Öffnung (48) in der zweiten Wand (44) befinden.

3. Hebemechanismus (20) nach Anspruch 2, wobei sich der im Wesentlichen V-förmige Arm (32) relativ zur Rahmenstruktur (28) um die Lager (78, 80) dreht.

4. Hebemechanismus (20) nach Anspruch 1, ferner eine Führungsbahn (50) umfassend, die entlang von Ecken der Rahmenstruktur (28) angeordnet ist.

5. Hebemechanismus (20) nach Anspruch 1, wobei die Geometrie des im wesentlichen V-förmigen Arms (32) und des Antriebsglieds (30) es ermöglichen, die vom Motor (38) angetriebene Drehbewegung des Antriebselements (94) in eine lineare vertikale Bewegung umzusetzen.

6. Hebemechanismus nach Anspruch 1, ferner einen zweiten V-förmigen Arm und ein zweites Antriebsglied umfassend.

## Revendications

1. Un mécanisme de levage (20) pour une machine d'emballage comprenant :
un chariot d'entraînement (24) avec une base stationnaire (26) et une structure de cadre mobile (28), la structure de cadre (28) ayant une première paroi (42) et une deuxième paroi (44) ;
un moteur (38) ;
un élément d'entraînement (94) configuré pour tourner en réponse au fonctionnement du moteur (38) ;
un élément entraîné (74) ;
une courroie d'entraînement (96) en prise avec l'élément d'entraînement (94) et
l'élément entraîné (74) ;
un arbre d'entraînement (34) s'étendant depuis l'élément entraîné sur le chariot d'entraînement (24) ;
une liaison d'entraînement (30) avec une première extrémité (82) et une deuxième extrémité (84), dans lequel :
l'arbre d'entraînement (34) s'étend à travers la première extrémité (82) de la liaison d'entraînement (30) ; et
l'arbre d'entraînement (34) est relié de manière fixe à la première extrémité (82) de la liaison d'entraînement (30) ;
le mécanisme de levage (20) comprenant
un bras sensiblement en forme de V (32) avec une première extrémité (86), une deuxième extrémité (88) et une partie creuse (90) située entre celles-ci, la première extrémité (86) étant reliée de manière rotative à la deuxième extrémité (84) de la liaison d'entraînement (30) ; et
un deuxième arbre (36) traversant et relié de manière rotative à la deuxième extrémité (88) du bras en forme de V (32), le deuxième arbre (36) s'étendant de la première paroi (42) à la deuxième paroi (44) ;
la courroie d'entraînement (96) transmettant un mouvement de rotation de l'élément d'entraînement (94) à l'élément entraîné (74) ;
le mouvement de rotation étant transmis à l'arbre d'entraînement (34) ;
la liaison d'entraînement (30) étant mise en rotation par la rotation de l'arbre d'entraînement (34) ; et
le bras en forme de V (32) étant mis en rotation par la liaison d'entraînement (30) de manière à ce que la structure de cadre mobile (28) se déplace verticalement par rapport à la base (26) quand le moteur (38) est mis en marche.

2. Le mécanisme de levage (20) de la revendication 1, comprenant en sus des paliers (78, 80) à chaque extrémité du deuxième arbre (36) ;
les paliers (78, 80) étant situés à l'intérieur d'une première ouverture circulaire (46) dans la première paroi (42) et une deuxième ouverture circulaire (48) dans la deuxième paroi (44).

3. Le mécanisme de levage (20) de la revendication 2, dans lequel le bras sensiblement en forme de V (32) tourne relativement à la structure de cadre (28) autour des paliers (78, 80).

4. Le mécanisme de levage (20) de la revendication 1, comprenant en sus un rail de guidage (50) situé le long des coins de la structure de cadre (28).

5. Le mécanisme de levage (20) de la revendication 1, dans lequel la géométrie du bras sensiblement en forme de V (32) et de la liaison d'entraînement (30) permet au mouvement de rotation de l'élément d'entraînement (94) alimenté par le moteur (38) de se traduire en un mouvement vertical linéaire.

6. Le mécanisme de levage (20) de la revendication 1, comprenant en sus un deuxième bras en forme de V et une deuxième liaison d'entraînement.
